# EUROPÄISCHE PATENTSCHRIFT

(11) **EP 2 751 449 B1**
(45) Veröffentlichungstag und Bekanntmachung des Hinweises auf die Patenterteilung: **02.10.2019**
(21) Anmeldenummer: 12759400.0
(22) Anmeldetag: 30.08.2012
(51) Int. Cl.: F16H 63/30, F16H 61/24

(54) **RASTIERVORRICHTUNG FÜR EINE SCHALTEINRICHTUNG**
LOCKING DEVICE FOR A SHIFTING ARRANGEMENT
DISPOSITIF DE VERROUILLAGE POUR UN MÉCANISME DE CHANGEMENT DE VITESSE

(30) Priorität: 02.09.2011 DE 102011053211; 05.09.2011 DE 102011053249
(43) Veröffentlichungstag der Anmeldung: 09.07.2014
(73) Patentinhaber: Koki Technik Transmission Systems GmbH, 09300 Niederwürschnitz (DE)
(72) Erfinder: FUCHS, Carsten, 09127 Chemnitz (DE); QUINGER, Torsten, 09419 Herold (DE); BLEICHER, Norbert, 07546 Gera (DE)
(74) Vertreter: Patentanwälte und Rechtsanwalt Weiß, Arat & Partner mbB
(86) Internationale Anmeldenummer: PCT/EP2012/066868
(87) Internationale Veröffentlichungsnummer: WO 2013/030281

(56) Entgegenhaltungen:
- EP-A2- 0 974 777
- DE-A1- 10 141 468
- DE-A1-102006 059 551
- DE-A1-102008 053 197
- DE-U1- 29 923 146
- GB-A- 2 100 374

## Beschreibung

Die Erfindung betrifft eine Rastiervorrichtung für eine Schalteinrichtung nach dem Oberbegriff des Anspruchs 1, wie offenbart in der DE 101 41 468 A1.

### Stand der Technik

Aus dem Stand der Technik sind verschiedene Arten von Rastiervorrichtungen bekannt und gebräuchlich.

In diesem Zusammenhang wird auf die DE 10 2008 030 455 A1 verwiesen. Dort ist eine Schaltanordnung eines Fahrzeug-Wechselgetriebes mit einer Schaltwelle gezeigt, wobei die Rastierbleche auf einer Trägerhülse angeordnet sind. Eine direkte Verbindung mit der Schaltwelle ist nicht vorgesehen. Nachteilig ist hierbei, dass die Verbindung solcher Rastierbleche mit einer entsprechenden Hülse technisch sehr aufwendig und nur im Zusammenhang mit weiteren Funktionalitäten sinnvoll ist.

Daneben wird auf die DE 10 2006 059 551 A1 zeigt eine Rastiervorrichtung auf, welche ein Verbindungsglied offenbart, das von der Rastierwelle rechtwinklig abragt. In gleicher Weise wird auf die DE 101 41 468 A1 verwiesen, welche ebenfalls eine von der Schaltwelle rechtwinklig wegragende Schaltkulisse aufzeigt. Ausserdem wird auf die DE 299 23 146 U1 hingewiesen, welche einen Grundkörper auf eine Schaltwelle aufzeigt, deren einzelne Wandungen von der Schaltwelle wegragen.

Weiterhin wird auf die EP 0 974 777 A2 hingewiesen, welche eine Schaltwelle mit einer darauf angeordneten Rastierungshülse offenbart. Daneben offenbaren die GB 2 100 374 A und die DE 10 2008 053 197 A1 zeigen weitere auf einer Schaltwelle angeordneten Funktionsteile.

Weiter wird auf die DE 10 2008 031 313 A1 abgestellt. Dort ist in gleicher Weise gezeigt, wie bei einer Schaltungsanordnung eines Kraftfahrzeug-Wechselgetriebes mit einer Schaltwelle, wobei beispielsweise auf einem Sperrzylinder ein Rastierblech vorgesehen ist. Auch hier ist die Verbindung des Rastierblechs mit beispeilsweise dem Sperrzylinder technisch aufwendig.

Aus dem Stand der Technik ist ausserdem die DE 10 2008 029 274 A1 zu erwähnen, welche ein Rastierblech offenbart, das eine Schaltfingeranordnung aufweist, auf der wiederum das Rastierblech befestigt ist. Die Schaltfingeranordnung schafft hier die Verbindung mit einer nicht näher bezeichneten Schalthülse.

### Aufgabe der Erfindung

Die Aufgabe der Erfindung ist es ein möglichst einfach gestaltetes Element mit einer Rastierkontur zur Verfügung zu stellen, welches zum einen mit einer Schaltwelle verbunden werden kann und zum anderen eine Funktion beispielsweise als Anschlag eines Rückstellmechanismus aufweist, wobei hier nach Möglichkeit Materialien sparsam eingesetzt werden und somit eine gewichts- und kostenoptimierte Variante zur Verfügung steht.

### Lösung der Aufgabe

Zur Lösung der Aufgabe führen die Merkmale des Patentanspruchs 1.

Eine erfindungsgemässe Rastiervorrichtung für eine Schalteinrichtung eines Fahrzeuggetriebes umfasst ein Rastierblech und eine Schaltwelle, wobei das Rastierblech über ein im wesentlichen rechtwinklig zu dem Rastierblech abragenden Schenkel mit der Schaltwelle ortsfest verbunden ist. Als abragender Schenkel kommen grundsätzlich alle Verbindungselemente in Betracht, welche im wesentlichen rechtwinklig von dem Rastierblech zu einer Schaltwelle hin ausgebformt sind und einstückig mit dem Rastierblech ausgebildet sind. Eine zweiteilige Ausführung ist denkbar, aber weist den Nachteil einer grösseren Arbeitsintensität auf. Diese Ausführung hat den Vorteil, dass keine zusätzlichen Elemente benötigt werden. Der Schenkel, welcher sich als Teil des Rastierblechs darstellt, kann auf einfache Weise hergestellt werden und hat aufgrund des Umstandes, dass nur ein einziges Teil benötigt wird, eine optimal verringerte Fehlerquellenquote.

Als Schalteinrichtung sind Automatikgetriebe für Fahrzeuge, als auch Handschaltgetriebe für Fahrzeuge gemeint. Als Fahrzeuge wiederum gelten alle Land-, Wasser- und Luftfahrzeuge.

Das erfindungsgemässe Rastierblech weist eine Rastierkontur und/oder eine Neutralgassennut auf. Sie dient der entsprechenden Nutzung für die Schalteinrichtung eines Fahrzeuggetriebes. Die Neutralgassenut und die Rastierkontur stehen mit einem Rastelement in Wirkverbindung, wobei die gewünschten Schaltvorgänge durch Drehen der Schaltwelle und des mit der Schaltwelle ortsfest im wesentlichen achsparallel verbundenen Rastierblechs realisiert werden. Ortsfest bedeutet, dass das Rastierblech und der dazugehörige Schenkel fest mit der Schaltwelle verbunden sind, so dass Drehbewegungen der Schaltwelle in gleicher Weise von dem Schenkel und dem Rastierblech ausgeführt werden.

Eine wesentliche rechtwinklige Anordnung des Rastierblechs zu dem Schenkel beinhaltet Abweichungen von 65° bis 115° zu der Schaltwelle, noch bevorzugter 85° bis 95° zu der Schaltwelle und am bevorzugtesten 90° zu der Schaltwelle. Unabhängig von der Winkelstellung des Schenkels zu der Schaltwelle ist das Rastierblech immer achsparallel zu der Schaltwelle angeordnet. Achsparallel bedeutet, dass das Rastierblech im wesentlichen parallel zu der Schaltwelle ausgerichtet ist, wobei es nicht auf den Winkel des Schenkels zu der Schaltwelle ankommt. Vorteilhaft hierbei ist der Umstand, dass eine einfache Übertragung von Schaltbewegungen in eine andere räumliche Ebene erreicht wird. Maßgeblich für die andere räumliche Ebene sind die Abmessungen des Schenkels.

In einem anderen Ausführungsbeispiel ist das Rastierblech und der Schenkel einstückig, vorzugsweise aus einem Blechstück gebildet. Als Blechstück können alle metallenen Werkstoffe, aber auch alternativ Kunststoffe und Verbundwerkstoffe in Frage kommen, welche den entsprechenden Belastungen standhalten und eine ausreichende Lebensdauer aufweisen. Als Blechstück wird ein flächiges Substrat angesehen, das länger ist, als es hoch ist. Die Herstellung des Rastierblechs mit dem Schenkel aus einem einstückigen Blechstück kann durch Kalt- oder Warmumformverfahren oder auch im Spritzgussverfahren hergestellt werden. Das Herstellungsverfahren ist im Rahmen des fachmännischen Könnens und unter Berücksichtigung der einzelnen Werkstoffe und Einsatzgebiete vom Fachmann entsprechend auszuführen.

Gemäß vorliegender Erfindung weist der Schenkel eine Öffnung auf, welche zur ortsfesten Aufnahme der Schaltwelle geeignet ist. Hierbei ist es unbeachtlich, in welcher Weise der Schenkel mit der Schaltwelle verbunden ist. Es kann beispielsweise durch Schweissen angefügt sein. Auch andere Möglichkeiten des Zusammenfügens von Schenkel und Schaltwelle sind denkbar. Die Öffnung stellt lediglich ein Ausführungsbeispiel dar, womit eine einfache Verbindung zwischen der Schaltwelle und dem Schenkel hergestellt wird. Es ist auch eine endseitig angeformte halbkreisförmige Öffnung möglich, welche auf die Schaltwelle aufgesetzt und anschliessend angefügt wird.

Gemäß vorliegender Erfindung weist der Schenkel einen Nocken auf. Dieser Nocken ist als eine teilweise vom Rest des Schenkels abragende Erhöhung oder Ausbuchtung ausgeführt. Der Nocken ermöglicht auf einfache Art und Weise, dass bei dem als Anschlag für einen gefedert gelagerten Schieber eines Rückstellmechanismus für Schaltgänge eine Reibungsreduzierung bei Relativdrehung eines Schiebers zu dem Anschlag erreicht wird. Dies wird durch eine Reduzierung auf eine minimale Kontaktfläche, z.B. als Linienkontakt oder Punktkontakt, erreicht. Auf diese Weise wird auch noch vorteilhaft erreicht, dass das Anlegen des Schiebers im Wesentlichen rechtwinklig zur Wellenachse gewährleistet ist. Sollte auf den Nocken verzichtet werden, so ist dies möglich, bedarf aber einer grösseren Genauigkeit bei der Herstellung der einzelnen Teile wie Schieber und Schenkel und im Fügeprozess.

Neben den vorgenannten Varianten kann das Rastierblech auch mit in die Neutralgassennut eingearbeiteten Rampen zur Realisierung eines Rückstellmechanismus in eine Grundstellung, in der Regel die Gasse 3. und 4. Gang, ausgeführt werden.

### Figurenbeschreibung

Weitere Vorteile, Merkmale und Einzelheiten der Erfindung finden sich in dem folgend in verschiedenen Figuren gezeigten Ausführungsbeispiel. Diese Figuren zeigen im Einzelnen in:
- Figur 1: eine erfindungsgemässe Vorrichtung von schräg oben;
- Figur 2: eine teilweise Seitenansicht der Figur 1 mit einem Rückstellmechanismus für die Grundstellung;
- Figur 3: die gleiche Ansicht wie Figur 2 ohne den Rückstellmechanismus für die Grundstellung;
- Figur 4: eine Seitenansicht auf eine erfindungsgemässes Rastierblech von schräg oben.

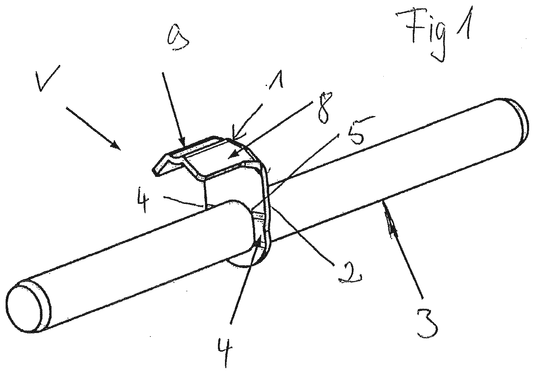

In Figur 1 ist eine Rastiervorrichtung V für Schalteinrichtungen eines Fahrzeuggetriebes gezeigt. Diese Rastiervorrichtung V besteht aus einem Rastierblech 1 und einem einstückig mit dem Rastierblech 1 verbundenen Schenkel 2. Ausserdem zeigt Figur 1 eine Schaltwelle 3, auf die der Schenkel 2 mit dem Rastierblech 1 über eine Öffnung 5 aufgezogen ist.

Daneben ist zu erkennen, wie das Rastierblech 1 eine Rastierkontur 8 und eine Neutralgassennut 9 ausbildet.

Weiterhin ist in Figur 1 zu erkennen, wie der Schenkel 2 in etwa der Ebene der Öffnung 5 einen Nocken 4 ausbildet. Dieser Nocken 4 ist über einen Gesamtbereich des Schenkels 2 also von einer Seitenkante zur anderen, lediglich unterbrochen durch die Öffnung 5, ausgebildet. Als Seitenkante sind die Kanten aufzufassen, welche die seitliche Verlängerung des Rasierblechs 1 hin zur Schaltwelle 3 bilden.

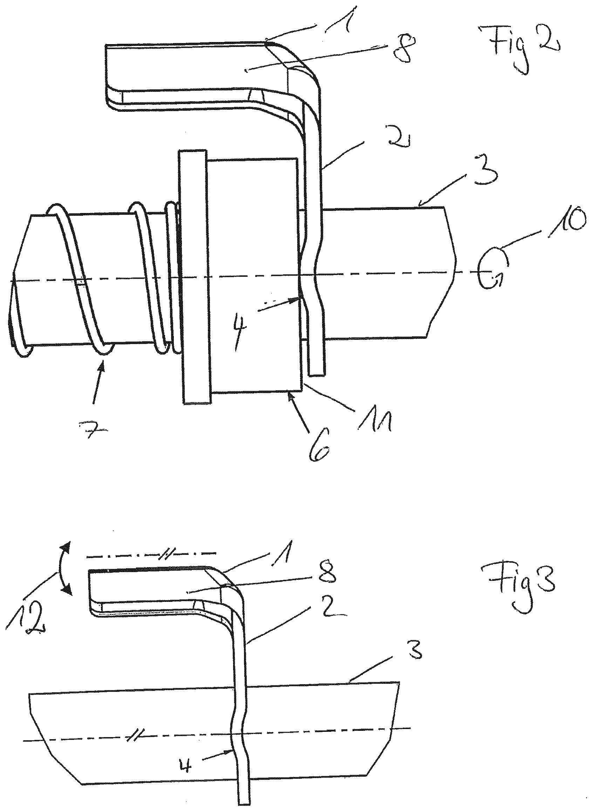

In Figur 2 ist gezeigt, wie ein Schieber 6 eines Rückstellmechanismus für die Grundstellung an den Nocken 4 anschlägt. Der Schieber 6 wird durch die Feder 7 gegen den Nocken 4 gedrückt. Bei einer Drehbewegung der Schaltwelle 3, wie sie beispielsweise durch den Pfeil 10 angedeutet ist, dreht sich der Schenkel 2 und das Rastierblech 1 relativ zu dem Schieber 6. Dabei gleitet der Nocken 4, welcher im Ausführungsbeispiel eine Wölbung aufweist an der Aussenkontur 11 des Schiebers 6 entlang, ohne dass es hierbei zu erhöhten Reibungsverlusten oder unnötigen Verhakelungen des Schenkels 2 mit dem Schieber 6 kommen kann.

In Figur 3 ist die Ansicht aus Figur 2 nochmals zu erkennen, wobei allerdings über den Pfeil 12 angedeutet ist, dass das Rastierblech 1 über den Schenkel 2 achsparallel ausgerichtet werden kann, ohne die rechtwinklige Anlage des Schiebers 6 am Nocken 4 zu beeinflussen. Der Nocken 4 dient dabei auch dem Ausgleich möglicher Ungenauigkeiten in der Herstellung anderer Bauteile, welche beispielsweise mit dem Rastierblech 1 zusammenwirken sollen.

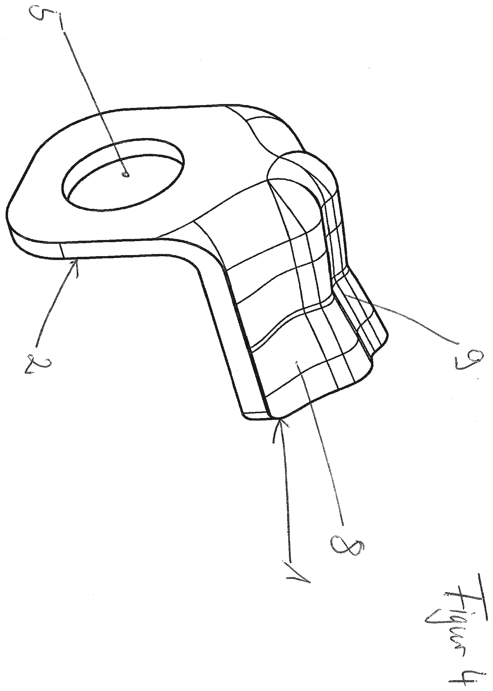

Figur 4 zeigt eine Draufsicht von schräg oben auf das Rastierblech 1 und den Schenkel 2. In den Schenkel2 ist die Öffnung 5 eingelassen, welche der Aufnahme der nicht gezeigten Schaltwelle 3 dient. Ausserdem ist auf dem Rastierblech 1 gut zu erkennen, wie die Neutralgassennut 9 und die Rastierkontur 8 ausgeformt ist.

**Bezugszeichenliste**

| | | | | | |
|---|---|---|---|---|---|
| 1 | Rastierblech | 34 | | 67 | |
| 2 | Schenkel | 35 | | 68 | |
| 3 | Schaltwelle | 36 | | 69 | |
| 4 | Nocken | 37 | | 70 | |
| 5 | Öffnung | 38 | | 71 | |
| 6 | Schieber | 39 | | 72 | |
| 7 | Feder | 40 | | 73 | |
| 8 | Rastierkontur | 41 | | 74 | |
| 9 | Neutralgassennut | 42 | | 75 | |
| 10 | Pfeil | 43 | | 76 | |
| 11 | Aussenkontur | 44 | | 77 | |
| 12 | Pfeil | 45 | | 78 | |
| 13 | | 46 | | 79 | |
| 14 | | 47 | | | |
| 15 | | 48 | | | |
| 16 | | 49 | | | |
| 17 | | 50 | | V | Rastiervorrichtung |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Rastiervorrichtung für eine Schalteinrichtung eines Fahrzeuggetriebes mit einem Rastierblech (1), wobei die Rastiervorrichtung einen im Wesentlichen rechtwinklig von dem Rastierblech (1) abragenden Schenkel (2) zur ortsfesten Verbindbarkeit mit einer Schaltwelle (3) aufweist,
wobei der Schenkel (2) eine Öffnung (5) aufweist und die Öffnung (5) zur ortsfesten Aufnahme der Schaltwelle (3) dient,
**dadurch gekennzeichnet, dass**
der Schenkel (2) einen Nocken (4) beinhaltet und der Nocken (4) als Anschlag für einen gefedert gelagerten Schieber (6) eines Rückstellmechanismus in eine Grundstellung ausgeführt ist, wobei der Schenkel (2) den Nocken (4) in einer Ebene der Öffnung (5) ausbildet,
und der Nocken (4) über einen Gesamtbereich des Schenkels (2), von einer Seitenkante des Schenkels (2) zu einer anderen Seitenkante des Schenkels (2), lediglich unterbrochen durch die Öffnung (5), ausgebildet ist.

2. Rastiervorrichtung nach Anspruch 1 oder 2, **dadurch gekennzeichnet, dass** das Rastierblech (1) und der Schenkel (2) einstückig aus Blech ausgebildet sind.

3. Rastiervorrichtung nach einem der Ansprüche 1 bis 2, **dadurch gekennzeichnet, dass** das Rastierblech (1) achsparallel zu der Schaltwelle (4) angeordnet ist.

4. Rastiervorrichtung nach einem der Ansprüche 1 bis 3, **dadurch gekennzeichnet, dass** das Rastierblech (1) eine Rastierkontur (8) und/oder eine Neutralgassenut (9) aufweist.

5. Rastiervorrichtung nach einem der Ansprüche 1 bis 4, **dadurch gekennzeichnet, dass** in die Neutralgassennut des Rastierblechs Rampen zur Realisierung eines Rückstellmechanismus für eine Grundstellung eingearbeitet sind.

## Claims

1. Latching device for a shifting device of a vehicle transmission with a latching plate (1), the locking device having a limb (2) projecting substantially at right angles from the locking plate (1) for stationary connection to a switching shaft (3), the limb (2) having an opening (5) and the opening (5) serving for stationary reception of the switching shaft (3),
**characterized in**
**that** the limb (2) contains a cam (4) and the cam (4) is designed as a stop for a spring-mounted slide (6) of a resetting mechanism into a basic position, the limb (2) forming the cam (4) in a plane of the opening (5), and the cam (4) being designed over an entire region of the limb (2), from one side edge of the limb (2) to another side edge of the limb (2), only interrupted by the opening (5).

2. Locking device according to claim 1 or 2, **characterized in that** the locking plate (1) and the leg (2) are formed integrally from sheet metal.

3. Locking device according to one of claims 1 to 2, **characterised in that** the locking plate (1) is arranged axially parallel to the switching shaft (4).

4. Locking device according to one of claims 1 to 3, **characterised in that** the detent plate (1) has a detent contour (8) and/or a neutral gas groove (9).

5. Locking device according to one of claims 1 to 4, **characterised in that** ramps are incorporated in the neutral gas groove of the detent plate for the realisation of a resetting mechanism for a basic position.

## Revendications

1. Dispositif de verrouillage pour un mécanisme de changement de vitesse de véhicule avec une plaque de verrouillage (1),
dans lequel le dispositif de verrouillage présente une patte (2) ressortant de manière sensiblement perpendiculaire à la plaque de verrouillage (1) pour pouvoir être connectée de manière stationnaire à un arbre de changement de vitesse (3),
dans lequel la patte (2) présente une ouverture (5) et l'ouverture (5) sert à recevoir de manière stationnaire l'arbre de changement de vitesse (3), **caractérisé par le fait que** la patte (2) contient une came (4) et que la came (4) est conçue comme butée pour un coulisseau (6), monté de manière élastique, d'un mécanisme de rappel en position de base, où la patte (2) forme la came (4) dans un plan de l'ouverture (5), et la came (4) est formée sur une zone entière de la patte (2), d'un bord latéral de la patte (2) à un autre bord latéral de la patte (2), interrompue uniquement par l'ouverture (5).

2. Dispositif de verrouillage selon la revendication 1 ou 2, **caractérisé par le fait que** la plaque de verrouillage (1) et la patte (2) sont réalisées d'une seule pièce en forme de plaque.

3. Dispositif de verrouillage selon l'une des revendications 1 à 2, **caractérisé par le fait que** la plaque de verrouillage (1) est disposée de manière parallèle à l'axe de l'arbre de changement de vitesse (4).

4. Dispositif de verrouillage selon l'une des revendications 1 à 3, **caractérisé par le fait que** la plaque de verrouillage (1) présente un contour de verrouillage (8) et/ou une rainure à gaz neutres (9).

5. Dispositif de verrouillage selon l'une des revendications 1 à 4, **caractérisé par le fait que** dans la rainure à gaz neutres de la plaque de verrouillage sont réalisées des rampes pour la réalisation d'un mécanisme de rappel à une position de base.
